# EUROPÄISCHE PATENTANMELDUNG

(11) **EP 2 096 795 A1**
(43) Veröffentlichungstag der Anmeldung: **02.09.2009**
(21) Anmeldenummer: 09002114.8
(22) Anmeldetag: 16.02.2009
(51) Int. Cl.: H04L 12/26

(54) **Selbstdiagnostizierende Kommunikationsvorrichtung**

(30) Priorität: 27.02.2008 DE 102008011346
(71) Anmelder: PHOENIX CONTACT GmbH & Co. KG, 32825 Blomberg (DE)
(72) Erfinder: Nenna, Rafael, 31860 Emmerthal (DE)
(74) Vertreter: Bill, Burkart Hartmut

(57) **Zusammenfassung**

Die Erfindung betrifft eine Kommunikationsvorrichtung mit einem Sender (101) zum Aussenden einer vorbestimmten Nachricht über ein Kommunikationsnetzwerk, einem Empfänger (103) zum Empfangen einer Rückantwort auf die vorbestimmte Nachricht über das Kommunikationsnetzwerk und einem Prozessor (105), der ausgebildet ist, ein Zeitintervall zwischen dem Aussenden der vorbestimmten Nachricht und dem Empfang der Rückantwort zu erfassen und einem vorbestimmten Messintervall zuzuordnen.

## Beschreibung

Die vorliegende Erfindung betrifft das Gebiet der Kommunikationssysteme.

Ein wichtiges Merkmal zur Qualifizierung drahtloser und drahtgebundener Kommunikationssysteme ist deren Übertragungsgeschwindigkeit sowie Jitter. Die Ermittlung dieser Kenngrößen wird zum derzeitigen Stand der Technik während der Entwicklungsphase durchgeführt und das Ergebnis der Ermittlung anschließend in einem Datenblatt als eine typische Kenngröße angegeben. Die tatsächlich erzielbare Performance, beispielsweise eine Übertragungsgeschwindigkeit, eines drahtlosen Kommunikationssystems unterliegt jedoch insbesondere auch den örtlichen Gegebenheiten an einem Installationsort. So hat beispielsweise die Qualität eines lokalen Funkfeldes einen starken Einfluss auf die Performance eines in diesem Feld angeordneten, drahtlosen Kommunikationssystems. Kommt es beispielsweise während einer Übertragung zu einem durch das Funkfeld verursachten Fehler, so können Nachrichtenpakete im Rahmen einer Retransmission erneut übertragen werden, wodurch ein unvorhersehbarer zeitlicher Verzug entsteht.

Neben den örtlichen Gegebenheiten hat ferner auch die Anzahl von Einstellungs- und/oder Parametrierungsmöglichkeiten der Kommunikationssysteme am Installationsort einen Einfluss auf die resultierende Performance. Dabei ist die Wirksamkeit der Optimierungsparameter jedoch oft nicht unmittelbar feststellbar. Unter Umständen können sich nach einer Anwendung einiger Optimierungsmaßnahmen Konstellationen ergeben, die die Leistungsfähigkeit des jeweiligen Kommunikationssystems verbessern oder auch verschlechtern können.

Die Summe der auf die Performance eines Kommunikationssystems Einfluss nehmenden Faktoren ist daher schwer vorhersehbar, so dass die Benutzer der Kommunikationssysteme die Performance-Messungen oft eigenständig durchführen müssen. Diese Messungen sind jedoch mit einem nicht unerheblichen Aufwand verbunden und müssen ferner oft indirekt mit einem überlagerten Kommunikationssystem sowie speziellen, zusätzlichen Messaufbauten durchgeführt werden. Die Genauigkeit der so erzielten Messergebnisse ist oft auch gering.

Es ist die Aufgabe der vorliegenden Erfindung, ein effizientes Diagnosekonzept für Kommunikationsvorrichtungen zu schaffen.

Diese Aufgabe wird durch die Merkmale der unabhängigen Ansprüche gelöst. Vorteilhafte Weiterbildungsformen sind in den abhängigen Ansprüchen angegeben.

Die Erfindung betrifft eine Kommunikationsvorrichtung, die beispielsweise im Feld eine Selbstdiagnose durchführen kann. Die Kommunikationsvorrichtung, beispielsweise eine Basisstation, kann eigenständig beispielsweise einen erhöhten Datendurchsatz erzeugen, der beispielsweise höher als ein mittlerer zu erwartender Datendurchsatz ist. Dazu können beispielsweise speziell vorbestimmte Nachrichten an einen oder an mehrere Kommunikationsempfänger über ein Kommunikationsnetz unter Verwendung von beispielsweise Bluetooth versendet werden. Die Kommunikationsempfänger quittieren den Empfang der empfangenen Nachricht üblicherweise mit einer speziellen Rückantwort, so dass zwischen dem Versenden der vorbestimmten Nachricht und dem Empfang der Rückantwort die verstrichene Zeit gemessen werden kann. Bevorzugt wird jedoch nicht jeder einzelne Messwert gespeichert. Vielmehr kann jedes Messergebnis einem bestimmten Messintervall aus einer Mehrzahl von Messintervallen, beispielsweise von 0 bis 100 ms, die in 1-ms-Schritten beabstandet sind, zugeordnet werden. Dabei kann auch nur die Anzahl der Treffer, d.h. der Messergebnisse, pro Intervall gespeichert werden, was zu einer starken Komprimierung des entstandenen Datensatzes führt und eine Implementierung des Verfahrens auf Mikrocontrollern ermöglicht.

Der möglichst hohe Datendurchsatz wird beispielsweise so gewählt, dass mehrere 10.000 Messungen möglich sind, um eine genügend hohe statistische Auswertung zu erhalten. Bei dieser Anzahl der Nachrichten wird, wie vorstehend ausgeführt, bevorzugt nur die Anzahl der einem Messintervall zuzuordnenden Messergebnisse in festgehalten, so dass die Speicherung der einzelnen Messwerte nicht notwendig ist.

Die Erfindung betrifft eine Kommunikationsvorrichtung mit einem Sender zum Aussenden einer vorbestimmten Nachricht über ein Kommunikationsnetzwerk, einem Empfänger zum Empfangen einer Rückantwort auf die vorbestimmte Nachricht über das Kommunikationsnetzwerk und einem Prozessor, der ausgebildet ist, ein Zeitintervall zwischen dem Aussenden der vorbestimmten Nachricht und dem Empfang der Rückantwort zu erfassen und einem vorbestimmten Messintervall zuzuordnen.

Gemäß einer Ausführungsform ist der Sender ausgebildet, die vorbestimmte Nachricht über das Kommunikationsnetzwerk an eine Mehrzahl von Kommunikationsempfängern auszusenden, wobei der Empfänger ausgebildet ist, eine Anzahl von Rückantworten ansprechend auf die vorbestimmte Nachricht zu empfangen, und wobei der Prozessor ausgebildet ist, die Anzahl von Zeitintervallen zwischen dem Aussenden der vorbestimmten Nachricht und einem Empfang der jeweiligen Rückantwort zu erfassen und die Zeitintervalle einem oder mehreren Messintervallen zuzuordnen.

Gemäß einer Ausführungsform ist das Zeitintervall einem Messintervall von einer Mehrzahl von Messintervallen zuordenbar.

Gemäß einer Ausführungsform umfasst die Kommunikationsvorrichtung ein Speicherelement zum Speichern einer Anzahl der dem Messintervall zugeordneten Zeitintervalle.

Gemäß einer Ausführungsform ist der Prozessor ferner ausgebildet, auf der Basis einer Anzahl von Zeitintervallen, die einem Messintervall zugeordnet sind, eine Übertragungsgeschwindigkeit, insbesondere eine mittlere Übertragungsgeschwindigkeit, oder einen Systemparameter, insbesondere einen mittleren Systemparameter, zu bestimmen.

Gemäß einer Ausführungsform ist der Prozessor ausgebildet, auf der Basis des Zeitintervalls oder auf der Basis einer Anzahl von Zeitintervallen, die einem oder mehreren Messintervallen zugeordnet sind, eine adaptive Einstellung eines Systemparameters durchzuführen.

Gemäß einer Ausführungsform ist der Prozessor ausgebildet, einen statistischen Mittelwert über eine Anzahl der Zeitintervalle, die einem oder mehreren Messintervallen zugeordnet sind, zu ermitteln.

Gemäß einer Ausführungsform ist die Zeitdauer des bzw. der Messintervalle konfigurierbar ausgeführt.

Gemäß einer Ausführungsform ist der Prozessor ausgebildet, ein statistisches Minimum und/oder ein statistisches Maximum über die gesamte Messdauer zu ermitteln.

Die Erfindung betrifft ferner ein Kommunikationsverfahren mit Aussenden einer vorbestimmten Nachricht über ein Kommunikationsnetzwerk, Empfangen einer Rückantwort auf die vorbestimmte Nachricht über das Kommunikationsnetzwerk, Erfassen eines Zeitintervalls zwischen dem Aussenden der vorbestimmten Nachricht und dem Empfang der Rückantwort und Zuordnen des erfassten Zeitintervalls zu einem vorbestimmten Messintervall.

Weitere Ausführungsbeispiele werden Bezug nehmend auf die beiliegenden Zeichnungen erläutert. Es zeigen:
Fig. 1 eine Kommunikationsvorrichtung; und
Fig. 2 ein Kommunikationsszenario mit einem beispielhaften Datensatz.

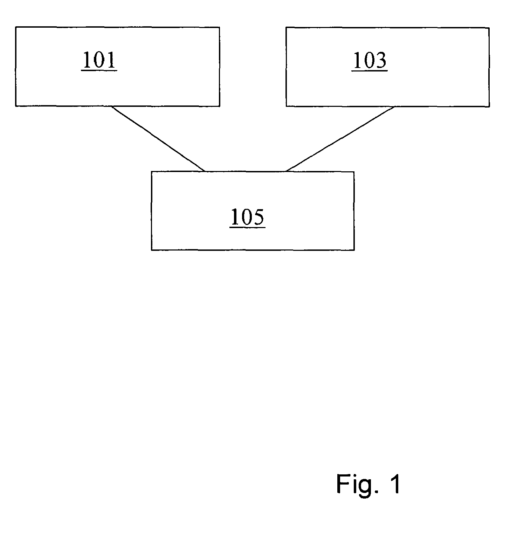

Die in Fig. 1 dargestellte Kommunikationsvorrichtung umfasst einen Sender zum Aussenden einer vorbestimmten Nachricht über ein Kommunikationsnetzwerk an einen oder an mehrere Kommunikationsnetzwerkteilnehmer. Die Kommunikationsvorrichtung umfasst ferner einen Empfänger 103 zum Empfangen einer Rückantwort auf die vorbestimmte Nachricht über das Kommunikationsnetzwerk, beispielsweise über Bluetooth, von einem oder von mehreren Netzwerkteilnehmern. Dem Empfänger 103 ist ein Prozessor 105 nachgeschaltet, der beispielsweise ein oder mehrere Zeitintervalle zwischen dem Aussenden der vorbestimmten Nachricht und dem Empfang der Rückantwort erfasst und einem vorbestimmten Messintervall zuordnet.

Bei dem Sender 101 und bei dem Empfänger 103 kann es sich beispielsweise um standardmäßige Kommunikationskomponenten handeln, die zur standardmäßigen Kommunikation über das Kommunikationsnetzwerk vorgesehen sind.

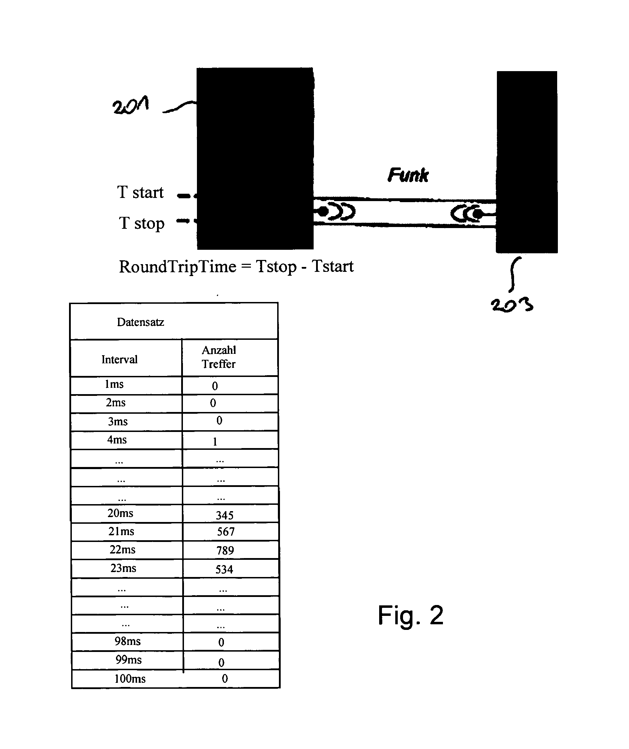

Fig. 2 zeigt eine Kommunikationsvorrichtung 201, beispielsweise eine Bluetooth-Basisstation, die beispielsweise über einen Funkkanal mit einem Empfänger 203 kommuniziert. Die Basisstation 201 ist vorgesehen, als Systemparameter beispielsweise die Roundtrip-Time zu bestimmen, die zwischen einem Aussenden der vorbestimmten Nachricht und dem Empfangen der Rückantwort hierauf verstreicht. Bevorzugt ist die Basisstation 201 ausgebildet, eine Differenz zwischen Tstop und Tstart zu bestimmen, also zwischen einem Zeitpunkt, zu dem die Rückantwort empfangen und einem Zeitpunkt, zu dem die vorbestimmte Nachricht ausgesendet wurde.

Die Kommunikationsvorrichtung 201 kann beispielsweise die Merkmale der in Fig. 1 dargestellten Kommunikationsvorrichtung aufweisen.

Fig. 2 verdeutlicht ferner beispielhaft einen Datensatz mit einer Anzahl von Messintervallen, die in 1-ms-Schritten aufgeteilt sind. So fällt beispielsweise nur ein Messergebnis in das Intervall von 4 ms. In dem Intervall von 20 ms sind beispielsweise 345 Messergebnisse, in dem Intervall von 21 ms 667 Messergebnisse, in dem Intervall von 22 ms 789 Messergebnisse und in dem Intervall von 23 ms 634 Ergebnisse verzeichnet. Auf der Basis dieser Messergebnisse können eine mittlere Roundtrip-Time sowie beispielsweise auch minimale und maximale Roundtrip-Zeiten und/oder eine mittlere Übertragungsgeschwindigkeit bestimmt werden.

Gemäß einer Ausführungsform kann die Kommunikationsvorrichtung beispielsweise einen Speicher umfassen, der beispielsweise etwa 200 Byte groß ist, um beispielsweise 65.000 Messungen durchzuführen. Derzeitige Roundtrip-Zeiten von etwa 30 ms ermöglichen daher eine Messdauer von etwa 32 Minuten unter Berücksichtigung von erwarteten Messergebnissen unterhalb von 100 ms und einer Messgranularität von 1 ms pro Zeitintervall. Durch eine Reservierung von etwa 400 Bytes lässt sich beispielsweise eine Langzeitmessung von etwa 4 Jahren durchführen, so dass eine statistische Messauswertung über diesen Zeitabschnitt möglich ist.

Die in Fig. 2 dargestellte Kommunikationsvorrichtung kann ferner steuerbar ausgeführt sein, so dass deren Aktivierung ferngesteuert möglich ist.

Das erfindungsgemäße Konzept versetzt ein Kommunikationssystem in die Lage, die tatsächliche Performance im Feld unter Berücksichtigung aller Einstellungen sowie der Qualität des örtlichen Funkfeldes zu ermitteln und eine Selbstdiagnose durchzuführen. Somit ist es möglich, beispielsweise nach einer Änderung eines örtlichen Parameters seitens eines Benutzers Messungen auszulösen, um die Auswirkungen dieser Änderung direkt und anhand von Messergebnissen bewerten zu können.

Die Messwerte können analytisch ausgewertet werden, was in der Kommunikationsvorrichtung automatisiert durchgeführt werden kann. Die Messungen können mit unterschiedlichen Parametern wiederholt werden, wodurch die Kommunikationsvorrichtung die günstigeren Systemparameter selbst ermitteln und optimal, beispielsweise adaptiv, einstellen kann. Das Kommunikationsgerät könnte sich also auch adaptiv und Performance-optimiert an die örtlichen Gegebenheiten anpassen.

Das erfindungsgemäße Konzept kann nicht nur in Bluetooth-oder WLAN-Netzwerken (WLAN: Wireless Local Area Network) eingesetzt werden, sondern kann überall dort Anwendung finden, wo die Übertragungseigenschaften erst am Installationsort bestimmt werden können.

## Patentansprüche

1. Kommunikationsvorrichtung, mit:
einem Sender (101) zum Aussenden einer vorbestimmten Nachricht über ein Kommunikationsnetzwerk;
einem Empfänger (103) zum Empfangen einer Rückantwort auf die vorbestimmte Nachricht über das Kommunikationsnetzwerk; und
einem Prozessor (105), der ausgebildet ist, ein Zeitintervall zwischen dem Aussenden der vorbestimmten Nachricht und dem Empfang der Rückantwort zu erfassen und einem vorbestimmten Messintervall zuzuordnen.

2. Kommunikationsvorrichtung nach einem der vorhergehenden Ansprüche, wobei der Sender (101) ausgebildet ist, die vorbestimmte Nachricht über das Kommunikationsnetzwerk an eine Mehrzahl von Kommunikationsempfängern auszusenden, wobei der Empfänger (103) ausgebildet ist, eine Anzahl von Rückantworten ansprechend auf die vorbestimmte Nachricht zu empfangen, und wobei der Prozessor (105) ausgebildet ist, die Anzahl von Zeitintervallen zwischen dem Aussenden der vorbestimmten Nachricht und einem Empfang der jeweiligen Rückantwort zu erfassen und die Zeitintervalle einem oder mehreren Messintervallen zuzuordnen.

3. Kommunikationsvorrichtung nach einem der vorhergehenden Ansprüche, wobei das Zeitintervall einem Messintervall von einer Mehrzahl von Messintervallen zuordenbar ist.

4. Kommunikationsvorrichtung nach einem der vorhergehenden Ansprüche, mit einem Speicherelement zum Speichern einer Anzahl der dem Messintervall zugeordneten Zeitintervalle.

5. Kommunikationsvorrichtung nach einem der vorhergehenden Ansprüche, wobei der Prozessor (105) ferner ausgebildet ist, auf der Basis einer Anzahl von Zeitintervallen, die einem Messintervall zugeordnet sind, eine Übertragungsgeschwindigkeit, insbesondere eine mittlere Übertragungsgeschwindigkeit, oder einen Systemparameter, insbesondere einen mittleren Systemparameter, zu bestimmen.

6. Kommunikationsvorrichtung nach einem der vorhergehenden Ansprüche, wobei der Prozessor (105) ausgebildet ist, auf der Basis des Zeitintervalls oder auf der Basis einer Anzahl von Zeitintervallen, die einem oder mehreren Messintervallen zugeordnet sind, eine adaptive Einstellung eines Systemparameters durchzuführen.

7. Kommunikationsvorrichtung nach einem der vorhergehenden Ansprüche, wobei der Prozessor (105) ausgebildet ist, einen statistischen Mittelwert über eine Anzahl der Zeitintervalle, die einem oder mehreren Messintervallen zugeordnet sind, zu ermitteln.

8. Kommunikationsvorrichtung nach einem der vorhergehenden Ansprüche, wobei die Zeitdauer des bzw. der Messintervalle konfigurierbar ist.

9. Kommunikationsvorrichtung nach einem der vorhergehenden Ansprüche, wobei der Prozessor (105) ausgebildet ist, ein statistisches Minimum oder ein statistisches Maximum über eine gesamte Messdauer zu ermitteln.

10. Kommunikationsverfahren, mit
Aussenden einer vorbestimmten Nachricht über ein Kommunikationsnetzwerk;
Empfangen einer Rückantwort auf die vorbestimmte Nachricht über das Kommunikationsnetzwerk; und
Erfassen eines Zeitintervalls zwischen dem Aussenden der vorbestimmten Nachricht und dem Empfang der Rückantwort; und
Zuordnen des erfassten Zeitintervalls zu einem vorbestimmten Messintervall.
